# EUROPEAN PATENT APPLICATION

(11) **EP 3 419 288 A1**
(43) Date of publication of application: **26.12.2018**
(21) Application number: 16890765.7
(22) Date of filing: 07.12.2016
(51) Int. Cl.: H04N 13/04, H04N 13/00, H04N 13/02

(54) **METHOD AND DEVICE FOR TRANSMITTING/RECEIVING FREE VIEWPOINT BROADCAST**

(30) Priority: 19.02.2016 KR 20160019587
(71) Applicant: FOUNDATION FOR RESEARCH AND BUSINESS, SEOUL NATIONAL UNIVERSITY OF SCIENCE AND TECHNOLOGY, Seoul 01811 (KR)
(72) Inventor: KIM, Dong Ho, Seoul 06219 (KR); YOU, Dong Ho, Seoul 01860 (KR); JANG, Jung Yup, Seoul 02217 (KR)
(74) Representative: Dehns
(86) International application number: PCT/KR2016/014285
(87) International publication number: WO 2017/142175

(57) **Abstract**

Provided is a user terminal compatible with an advanced television system Committee (ATSC) 3.0 protocol so as to receive a free viewpoint image. The user terminal can comprise: a communication unit for receiving service layer signaling (SLS) comprising a user service bundle description (USBD), transmission information (service-based transport session instance description (S-TSID)), media information (media presentation description (MPD)) and free viewpoint information, related to the free viewpoint image; and a processor for referencing, within the service layer signaling, at least one of the transmission information, the media information and the free viewpoint information, corresponding to a user's request, according to the user service bundle description, and setting a payload for receiving the free viewpoint image.

## Description

### Technical Field

At least one example embodiment relates to a method and device for transmitting and receiving a free viewpoint broadcast, and more particularly, to a method and device for transmitting and receiving a free viewpoint broadcast that may support a broadcasting system based on an Internet protocol (IP).

### Related Art

A free viewpoint image service refers to a service in which a user readily selects an arbitrary three-dimensional (3D) viewpoint to enjoy media and to experience an enhanced immersion. Currently, advances in video coding and communication technology have contributed to enabling a variety of services that provide multi-view images such as a 3D free viewpoint image. Research and development and standardization on a real-time/non-real-time broadcasting and streaming service that provides a free viewpoint broadcast according to various needs of a user are actively conducted.

Also, standardization is ongoing on an Internet protocol (IP)-based protocol stack. For example, there is a discussion on a signaling scheme for a multi-view broadcasting service in Advanced Television System Committee (ATSC) 3.0.

### Detailed Description

### Technical Subject

At least one example embodiment provides a user terminal that may receive a free viewpoint broadcast based on a transmission protocol of a Real Time Object Delivery over Unidirectional Transport (ROUTE).

At least one example embodiment also provides a base station that may transmit a free viewpoint broadcast based on a signaling compatible with Advanced Television System Committee (ATSC) 3.0 standard.

### Solution

According to an aspect, there is provided a user terminal configured to be compatible with an Advanced Television System Committee (ATSC) 3.0 protocol and to receive a free viewpoint image. The user terminal may include a communicator configured to receive a service layer signaling that includes user service bundle description (USBD), transmission information (service-based transport session instance description (S-TSID)), media information (media presentation description (MPD)), and free viewpoint information, associated with a free viewpoint image; and a processor configured to perform referencing of at least one of the S-TSID, the MPD, and the free viewpoint information corresponding to a request of a user within the service layer signaling, using the USBD, and to set a payload for receiving the free viewpoint image.

According to an example embodiment, the free viewpoint information may include at least one of video component information, audio component information, camera position information, microphone position information, zoom in/out information, and audio length information, corresponding to the free viewpoint image. In addition, the MPD may include segment information corresponding to each of a plurality of viewpoints. The free viewpoint information may include at least one of video component information, audio component information, camera position information, microphone position information, zoom in/out information, and audio length information, corresponding to each of the plurality of viewpoints.

According to another example embodiment, the MPD may include at least one of a video adaptation set and an audio adaptation set corresponding to each of a plurality of viewpoints. In addition, the video adaptation set may include a plurality of representations that is encoded based on a plurality of resolutions, respectively.

According to another example embodiment, the processor may be configured to extract at least one of service identification (ID) information, video and audio segments of a service, and information about a channel through which the video and the audio segments are transmitted, corresponding to the request of the user using the USBD, and to set the payload.

According to another aspect, there is provided a method of receiving a free viewpoint image. The method of receiving the free viewpoint image may include receiving a signaling that includes a plurality of pieces of metadata for receiving the free viewpoint image; detecting a service layer associated with the free viewpoint image based on the signaling; and setting a payload for receiving the free viewpoint image by referring to the plurality of pieces of metadata based on the detected service layer.

According to an example embodiment, the plurality of pieces of metadata may represent data generated based on extensible Markup Language (XML).

According to another aspect, there is provided a base station configured to encode an service layer signaling that includes free viewpoint information and to transmit the encoded service layer signaling to a user terminal. The base station may include an encoder configured to encode a service layer signaling that includes USBD, transmission information (S-TSID), media information (MPD), and free viewpoint information, associated with a free viewpoint image; and a communicator configured to transmit the service layer signaling corresponding to an ATSC 3.0 protocol to the user terminal.

According to an example embodiment, the MPD may include at least one of a video adaptation set and an audio adaptation set corresponding to each of a plurality of viewpoints. In addition, the video adaptation set may include a plurality of segments classified based on a preset time interval.

### Brief Description of Drawings

FIGS. 1A and 1B illustrate examples of a process of transmitting and receiving a free viewpoint image between a user terminal and a base station according to an example embodiment.
FIG. 2 illustrates an example of a service layer signaling (SLS) according to an example embodiment.
FIG. 3 illustrates an example of media information (media presentation description (MPD)) in detail according to an example embodiment.
FIG. 4A illustrates an example of a process of using a received service layer signaling at a user terminal according to an example embodiment.
FIG. 4B illustrates an example of a process of using a received service layer signaling at a user terminal according to another example embodiment.
FIG. 5 is a block diagram illustrating a user terminal according to an example embodiment.
FIG. 6 is a block diagram illustrating a base station according to an example embodiment.

### Mode

The following structural or functional description of example embodiments is provided as an example only and various alternations and modifications may be made to the example embodiments. Accordingly, the example embodiments are not construed as being limited to the disclosure and should be understood to include all changes, equivalents, and replacements within the technical scope of the disclosure.

Terms, such as first, second, and the like, may be used herein to describe components. Each of these terminologies is used merely to distinguish the corresponding component from other component(s). For example, a first component may be referred to as a second component, and similarly, the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

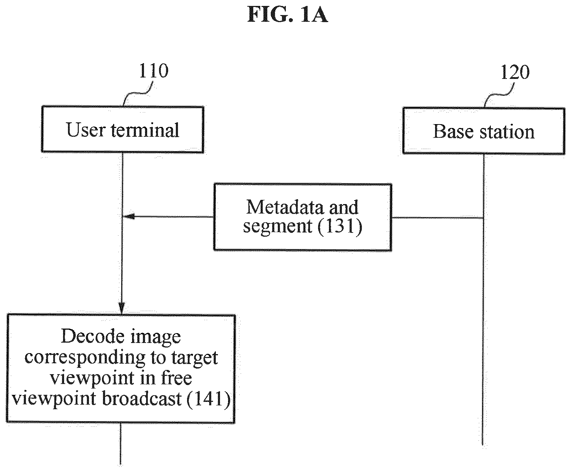

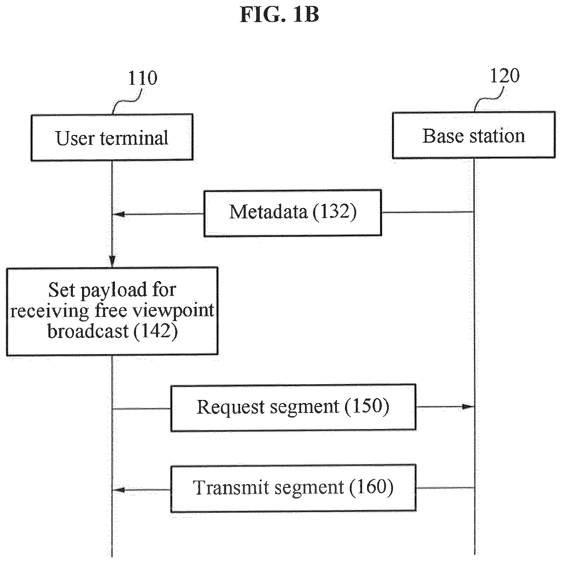

FIGS. 1A and 1B illustrate examples of a process of transmitting and receiving a free viewpoint image between a user terminal and a base station according to an example embodiment.

The term "media component" used herein may represent an encoded version of individual media types, such as an audio, a video, and a timed text, including various attributes, such as a bandwidth, a language, and a resolution.

Also, the media content used herein may represent a set of media components that share a common time line, for example, a video, an audio, and a timed text. In addition, the term "free viewpoint image" may represent media content about a specific object provided at a desired viewpoint of a user. Also, a free viewpoint broadcasting may represent a service that provides a free viewpoint image to a user terminal as one of mass communication by a base station.

Although the example embodiments are described based on a signaling for providing a free viewpoint image including a viewpoint of 360 degrees, it will be apparent to those skilled in the art without departing from the scope of the example embodiments that the example embodiments may be applicable to a multi-view image broadcasting method that may selectively provide an image to a user based on a desired range, that is, a plurality of viewpoints.

Referring to FIGS. 1A and 1B, a base station 120 provides a free viewpoint broadcasting service to a user terminal 110. In operations 131 and 132, the base station 120 may transmit metadata to the user terminal 110. According to an example embodiment, in operations 131 and 132, the metadata may represent data generated based on eXtensible markup language (XML).

According to an example embodiment, in operations 131 and 132, the base station 120, for example, a media server, may perform correction or calibration of a captured image and may transmit the corrected or calibrated metadata to the user terminal 120. Also, in this case, the user terminal 120 may perform depth estimation and interpolation. In operations 131 and 132, the metadata may include free view (viewpoint) information (FIV). In detail, the free viewpoint information may include correction or calibration information. The correction or calibration information, as information used to perform the depth estimation in response to images captured from a plurality of cameras, respectively, not being leveled, may include rotation information of a camera, translation information of the camera, and a mean reprojection error. Also, in operations 131 and 132, the metadata may include feature point information of each video frame. The feature point information may represent feature point information of video frames acquired from the plurality of cameras. Also, in operations 131 and 132, the metadata may include distance information and angle information between a subject and a camera or a microphone. Herein, when the base station 120 transmits the metadata wirelessly, for example, over a broadcast network in operations 131 and 132, the bandwidth may be significantly reduced.

According to another example embodiment, the base station 120, for example, a media server, may perform correction or calibration of a captured image, may extract a depth value corresponding to each two-dimensional (2D) video, and may transmit the corresponding metadata to the user terminal 120. In this case, since the user terminal 120 may perform only interpolation, it is possible to reduce an amount of calculation used for depth estimation. In the example embodiment, in operations 131 and 132, the metadata may further include feature point information of each video frame and distance information and angle information between the subject and the camera or the microphone.

According to another example embodiment, the base station 120, for example, a media server, may perform correction or calibration of a captured image, may extract a depth value corresponding to each 2D video, may perform interpolation on empty images between the plurality of cameras, and may transmit the corresponding metadata to the user terminal 120 in operations 131 and 132. For example, an example embodiment in which the base station 120 transmits the metadata in operations 131 and 132 by performing all of correction or calibration, depth estimation, and interpolation may be implemented using a broadband network. In this case, since only a target image captured at a desired viewpoint of the user may be transmitted to the base station 120, free viewpoint broadcast may be performed without transmitting and receiving additional free viewpoint information.

Also, in operations 131 and 132, the base station 120 may transmit, to the user terminal 110, one of the metadata associated with the free viewpoint broadcast and the metadata associated with a specific interval of the free viewpoint broadcast.

Referring to FIG. 1A, in operation 131, the base station 120 may transmit metadata and a segment associated with the free viewpoint broadcast to the user terminal 110. For example, in operation 131, the base station 120 may transmit the metadata and the segment associated with the free viewpoint broadcast to the user terminal 110 over a broadcast network or a broadband network. The metadata may include various types of information associated with a plurality of viewpoints. In operation 141, the user terminal 110 may decode an image corresponding to a target viewpoint in response to a request of the user among segments associated with the entire free viewpoint image, based on the received metadata. In detail, the user terminal 110 may refer to information in each of various types based on user service bundle description (USBD) and may decode the target image corresponding to the request of the user. A structure and a function of the USBD may be described by referring to additional figures.

As another example embodiment, referring to FIG. 1B, in operation 142, the user terminal 110 may set a payload for receiving the free viewpoint broadcast based on the metadata received in operation 132. In detail, the user terminal 110 may extract at least one of service identification (ID) information corresponding to the request of the user, video and audio segments of a service, and information about a channel through the video and audio segments are transmitted from the metadata received in operation 132. In operation 142, the user terminal 110 may set the payload based on the extracted information.

Herein, the terms "fragment" and "segment" used herein may be interchangeably used throughout. Also, the segment may represent a term of 3 Generation Partnership Project (3GPP) adaptive Hyper Text Transfer Protocol (HTTP) streaming.

In operation 150, the user terminal 110 may request the base station 120 for a segment for the free viewpoint broadcast based on the set payload. That is, the requested segments may be ones selected based on the metadata received in operation 132. For example, the user terminal 110 may perform the request using the broadband network in operation 150. According to the example embodiment, hybrid data transmission may be performed in that the base station 120 may transmit metadata using the broadcast network in operation 132 and may request a segment for receiving a target broadcast using the broadband network in operation 150.

In operation 160, the base station 120 may transmit, to the user terminal 110, the segment corresponding to the request received from the user terminal 110. According to another example embodiment, the base station 120 may parse media content associated with the free viewpoint broadcast and may extract a data part corresponding to the requested segment.

By repeating the aforementioned operations 142, 150, and 160, the user terminal 110 may play the free viewpoint broadcast using the received segment.

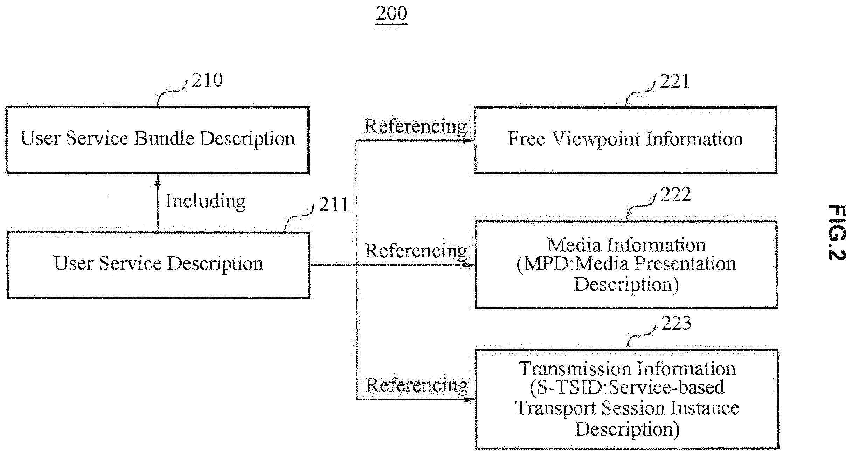

FIG. 2 illustrates an example of a service layer signaling (SLS) according to an example embodiment.

FIG. 2 illustrates metadata that is included in a service layer signaling 200. According to an example embodiment, the service layer signaling 200 may include user service bundle description (USBD) 210 that represents an attribute of a service layer associated with free viewpoint broadcast. In detail, the USBD 210 may represent a bundle signaling that includes information associated with at least one service. In the case of a terrestrial broadcasting service associated with the free viewpoint broadcast, the USBD 210 including a single piece of metadata associated with the free viewpoint broadcast may be employed.

In addition, the USBD 210 may include user service description (USD) 211 corresponding to a top level entry point in the included metadata. The following Table 1 describes an example of the USBD 210 and the USD 211 compatible with Advanced Television System Committee (ATSC) 3.0 standard, and transmitting and receiving the free viewpoint broadcast.

**[Table 1]**

| Element or attribute name | | | | Use | Data Type | Description |
|---|---|---|---|---|---|---|
| Bundle Description | | | | | | Root element of the user service bundle description (USBD) |
| | User Service Description | | | Service | | Specify an attribute of ultra high definition television (UHDTV) service. (A single instance of a UHDTV service.) |
| | | @serviceId | | 1 | anyURI | Identify unique uniform resource Identifier (URI) present within BSID (physical layer frame) range and corresponding to UHDTV service. Parameters oi (Service@globalServiceID) associated with ESG data are used. |
| | | @serviceld | | 1 | Unsigned Short | Specify a reference value corresponding to service entry in LLS or SLT. The value of this attribute is the same value of serviceld assigned to the entry. |
| | | @serviceStatus | | 0..1 | boolean | Specify the status of this service. The value indicates whether this service is active or inactive. When set to "1" (true), that indicates service is active. Shall default to 1 when not present. |
| | | @FVIUri | | 1 | anyURI | Refer to free viewpoint definition fragment about content of free viewpoint broadcast delivered over broadband network or broadcast network. |
| | | @fullMPDUri | | 1 | anyURI | Reference to an MPD fragment which contains descriptions for contents components of the UHDTV service delivered over broadcast and optionally, also over broadband. |
| | | @sTSIDUri | | 1 | anyURI | Reference to the S-TSID fragment which provides access related parameters to the transport sessions carrying contents of this UHDTV service. |
| | | name | | 0..N | string | Name of the UHDTV service as given by the lang attribute |
| | | | lang | 1 | language | Language of the UHDTV service name. |
| | | serviceLanguage | | 0..N | language | Available languages of the UHDTV service. |

According to another example embodiment, the service layer signaling 200 may include free viewpoint information (FVI) 221. The free viewpoint information 221 may include various types of information used to render free viewpoint video and audio, for example, video component information, audio component information, camera position information, microphone position information, zoom in/out information, and audio length information.

According to another example embodiment, the service layer signaling 200 may include media information (media presentation description (MPD)) 222 of video or audio segments associated with the free viewpoint broadcast. The MPD 222 may represent formalized description about the aforementioned media content. The media content may include the free viewpoint image and may be content according to a request or a demand of the user or live content.

Each piece of the contents may be divided into one or more intervals. That is, content may include one or more intervals.

The terms "interval" and "period" used herein may be interchangeably used throughout. The period may be a term of 3GPP adaptive HTTP streaming. Also, consecutive sequence of all the periods may constitute the entire media content. That is, the media content may include one or more periods.

For example, one or more intervals may be a basic unit. The one or more intervals may be signaled as metadata by a user terminal. That is, each piece of the metadata may describe media content corresponding to at least one interval.

According to another example embodiment, the service layer signaling 200 may include transmission information (service-based transport session instance description (S-TSID)) 223 including channel information. In detail, the S-TSID 223 may include channel information about a channel through which video or audio segments associated with the free viewpoint broadcast are transmitted. Also, the S-TSID 223 may describe Layered Coding Transport (LCT) or Physical Layer Pipeline (PLP) used to deliver segments corresponding to the request of the user.

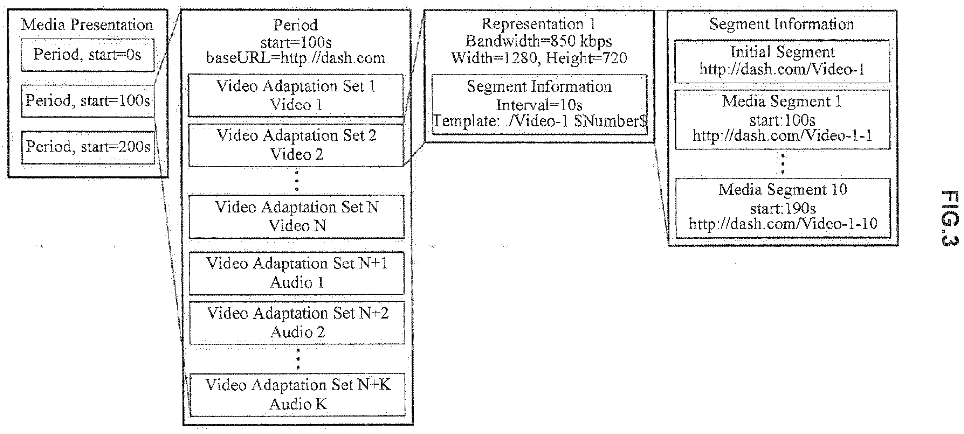

FIG. 3 illustrates an example of media information (MPD) in detail according to an example embodiment.

FIG. 3 illustrates an example of data that constitutes media information (MPD). The MPD may include a set of a plurality of segments corresponding to a single period. Here, each segment may represent an entity body of a response to an HTTP/1.1 GET request for HTTP-URL (or a GET request for a portion indicated by a byte range). A single segment may include media content corresponding to a predesignated interval.

In addition, each set of the plurality of segments may be defined as a representation. Herein, the terms "representation" and "alternative" may be interchangeably used throughout. Also, a single period may include at least one representation. That is, the representation may be a structured collection of one or more media contents present within a single period. The MPD may provide descriptive information so that the user may select at least one representation. A single representation may be determined based on segment information corresponding to at least one of a bandwidth, a width, a height, and a duration of the media content. For example, a single representation may represent media content encoded based on one of a plurality of resolutions that represents the free viewpoint image.

Referring to the example embodiment of FIG. 3, the media information (MPD) includes a plurality of representations based on a period of 100 seconds (s). Here, it is provided as an example only and should not be construed as being limiting the scope of other example embodiments.

Also, a single period may include at least one video adaptation set and at least one audio adaptation set. In addition, each of the video adaptation set and the audio adaptation set may correspond to one of a plurality of viewpoints that constitutes the free viewpoint image. For example, a first video adaptation set may represent media content corresponding to a first viewpoint and a second audio adaptation set may represent media content corresponding to a second viewpoint.

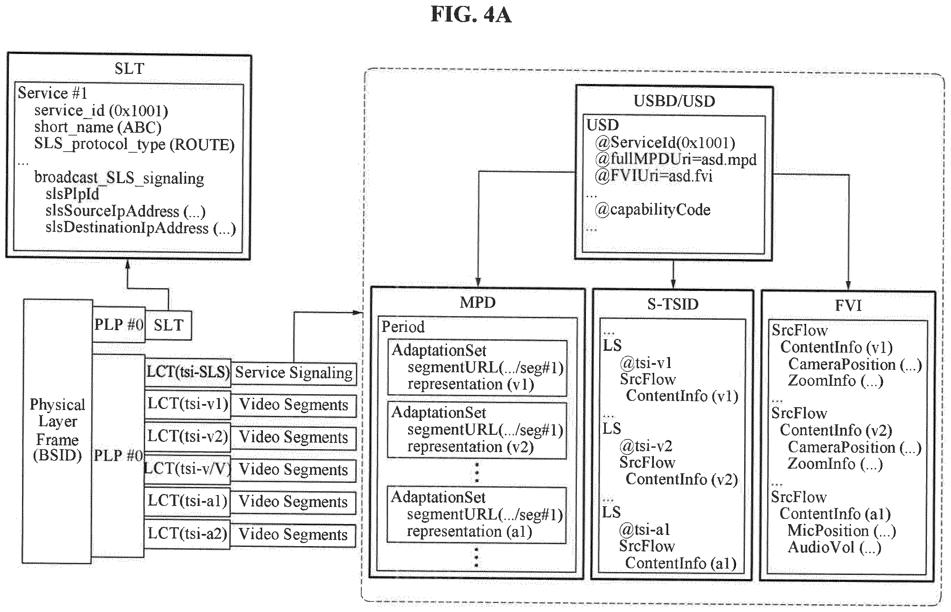

FIG. 4A illustrates an example of a process of using a received service layer signaling at a user terminal according to an example embodiment.

Hereinafter, a process of receiving, by a user terminal, a service list table (SLT) and a service layer signaling through a physical layer frame will be described with reference to FIG. 4A. The user terminal may verify service id (0×1001) of a service #1 corresponding to a request of a user by referring to the service list table (SLT) and may also verify Real Time Object Delivery over Unidirectional Transport (ROUTE) that is a protocol type used by the service layer signaling.

According to an example embodiment, the user terminal may refer to metadata included in the service layer signaling and may detect and decode a free viewpoint broadcast corresponding to the request of the user.

According to another example embodiment, the user terminal may set a payload for receiving a free viewpoint broadcast corresponding to the request of the user by referring to metadata included in the service layer signaling. In detail, the service layer signaling may include at least one of USBD/USD, MPD, S-TSID, and free viewpoint information as the metadata. The user terminal may refer to the service id (0× 1001) corresponding to the user request based on the USD and accordingly, may refer to a URI corresponding to each of the determined MPD, S-TSID, and free viewpoint information. As described above, the MPD may include each of a video or audio adaptation set corresponding to the entire free viewpoint broadcast, a segment URL, and a representation. Also, the S-TSID may include a route for receiving each segment of the entire free viewpoint broadcast. In addition, the free viewpoint information may include at least one of video component information, audio component information, camera position information, microphone position information, zoom in/out information and audio length information, corresponding to each of a plurality of viewpoints for receiving the free viewpoint broadcast.

Accordingly, the user terminal may receive and play a free viewpoint broadcast compatible with a video format or an audio format determined based on MPEG-DASH (Dynamic Adaptive Streaming over HTTP). The user terminal may be compatible with ATSC 3.0 standard based on the aforementioned protocol stack.

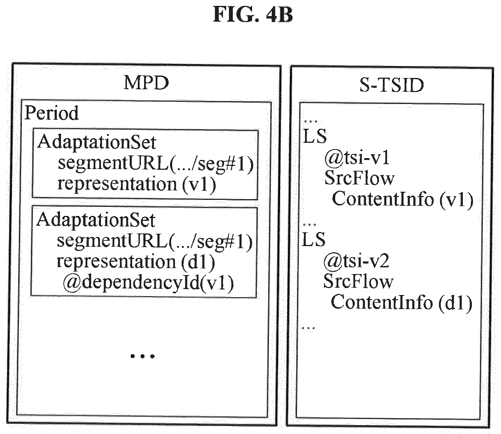

FIG. 4B illustrates an example of a process of using a received service layer signaling at a user terminal according to an example embodiment.

Referring to FIG. 4B, the service layer signaling may include MPD and S-TSID. Similar to the aforementioned example embodiment, there may be a process of transmitting, by a base station, for example, a media server, depth estimation and transmitting metadata. In this case, information about a depth image may be represented as an adaptation set of the MPD. In detail, information about the depth information may be mapped by allocating dependency ID to a corresponding 2D image v1. Also, there is a need to map an LCT session through which transmission is performed within the S-TSID.

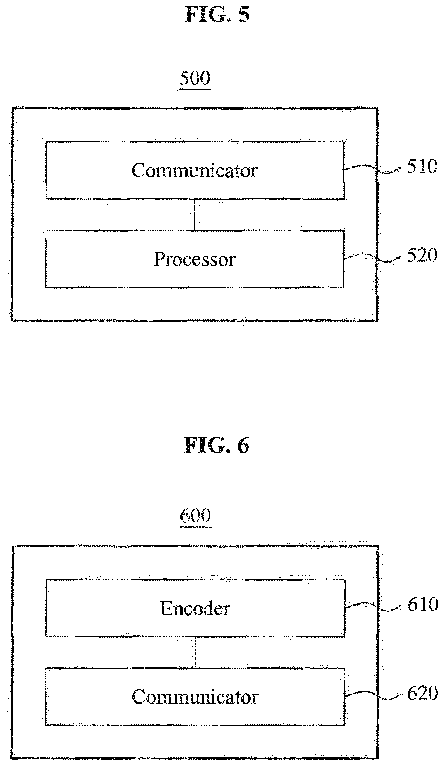

FIG. 5 is a block diagram illustrating a user terminal according to an example embodiment.

Referring to FIG. 5, a user terminal 500 may include a communicator 510 and a processor 520. The communicator 510 may refer to an apparatus that performs the aforementioned operations 131, 132, 150, and 160. In addition, the processor 520 may represent an apparatus that performs operation 142.

According to an example embodiment, the communicator 510 may be configured to receive a signaling that includes a plurality of pieces of metadata for receiving a free viewpoint image. In detail, the plurality of pieces of metadata may be data that is generated based on XML. The signaling may represent a service list table corresponding to ATSC 3.0 standard. The signaling may represent a service layer signaling corresponding to the ATSC 3.0 standard. In detail, the communicator 510 may receive the service layer signaling that includes at least one of user service bundle description (USBD), transmission information (S-TSID), media information (MPD), and free viewpoint information (FVI).

Also, the communicator 510 may be configured to receive a signaling that includes first metadata including at least one of video component information, audio component information, camera position information, microphone position information, zoom in/out information, and audio length information for receiving the free viewpoint image. According to an example embodiment, the communicator 510 may receive the signaling for receiving the free viewpoint image over a broadcast network.

According to another example embodiment, the communicator 510 may receive a signaling for receiving the free viewpoint image using a communication interface. The communication interface may include a wireless Internet interface, for example, a wireless local area network (WLAN), wireless fidelity (WiFi) direct, Digital Living Network Alliance (DLNA), wireless broadband (WiBro), World Interoperability for Microwave Access (WiMAX), and high speed downlink packet access (HSDPA), and a near field communication (NFC) interface, for example, Bluetooth™, Radio Frequency Identification (RFID), infrared data association (IrDA), ultra wideband (UWB), ZigBee, and NFC. In addition, the communication interface may represent all the interfaces, for example, a wired interface, capable of communicating with an outside.

According to another example embodiment, the processor 520 may detect a service layer associated with the free viewpoint image based on the received signaling. For example, the processor 520 may detect a free viewpoint image corresponding to a user request by referring to the detected service layer and may decode a desired image. Also, the processor 520 may set a payload for receiving a free viewpoint image by referring to a plurality of pieces of metadata based on the detected service layer.

The communicator 510 may receive a segment of the free viewpoint image corresponding to the user request using the payload set by the processor 520. The user may receive and view the MPEC-DASH based free viewpoint image that follows a protocol corresponding to ATSC 3.0 standard, using the user terminal 500.

FIG. 6 is a block diagram illustrating a base station according to an example embodiment.

Referring to FIG. 6, a base station 600 may include an encoder 610 and a communicator 620. The encoder 610 may encode a signaling that includes metadata associated with a free viewpoint image. Multiple base URLs may be provided to the user terminal 500 through the encoded signaling. The user terminal 500 may select at least one base URL in a procedure of extracting a desired segment.

When a semicolon or a null character is present in the URL, the encoder 610 may encode the characters based on an RFC 2616 rule.

For example, the encoder 610 may encode a service layer signaling that includes USBD, S-TSID, MPD, and free viewpoint information, to correspond to a protocol stack of ATSC 3.0 standard.

Also, the MPD may include segment information corresponding to each of a plurality of viewpoints. The free viewpoint information may include at least one of video component information, audio component information, camera position information, microphone position information, zoom in/out information, and audio length information, corresponding to each of the plurality of viewpoints. In addition, the MPD may include at least one of a video adaptation set and an audio adaptation set corresponding to each of the plurality of viewpoints.

The communicator 620 may transmit a service layer signaling corresponding to the ATSC 3.0 protocol to the user terminal 500. The aforementioned description of the communicator 510 may be applicable to the implementation of the communicator 620 and thus, a further description is omitted here.

The base station 600 may encode free viewpoint information for providing a free viewpoint broadcasting service within the protocol stack corresponding to ATSC 3.0 standard and may apply the encoded free viewpoint information to the user terminal 500. The user terminal 500 and the base station 600 according to the example embodiment may extend MPEG-DASH based video and audio data formats to the free viewpoint image, and may achieve compatibility with the ATSC 3.0 standard.

The example embodiments described herein may be implemented using hardware components, software components, and/or a combination thereof. For example, the apparatuses and the components described herein may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combination thereof, for independently or collectively instructing or configuring the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more computer readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tapes; optical media such as CD-ROM discs, and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

While this disclosure includes specific example embodiments, it will be apparent to one of ordinary skill in the art that various alterations and modifications in form and details may be made in these example embodiments without departing from the spirit and scope of the claims and their equivalents. For example, suitable results may be achieved if the described techniques are performed in a different order, and/or if components in a described system, architecture, device, or circuit are combined in a different manner, and/or replaced or supplemented by other components or their equivalents.

## Claims

1. A user terminal compatible with an Advanced Television System Committee (ATSC) 3.0 protocol, the user terminal comprising:
a communicator configured to receive a service layer signaling that comprises user service bundle description (USBD), transmission information (service-based transport session instance description (S-TSID)), media information (media presentation description (MPD)), and free viewpoint information, associated with a free viewpoint image; and
a processor configured to perform referencing of at least one of the S-TSID, the MPD, and the free viewpoint information corresponding to a request of a user within the service layer signaling, using the USBD, and to set a payload for receiving the free viewpoint image.

2. The user terminal of claim 1, wherein the free viewpoint information comprises at least one of video component information, audio component information, camera position information, camera angle information, microphone position information, microphone angle information, rotation information of a camera, translation information of the camera, a mean reprojection error, feature point information of video frames, zoom in/out information, and audio length information, corresponding to the free viewpoint image.

3. The user terminal of claim 2, wherein the MPD comprises segment information corresponding to each of a plurality of viewpoints, and
the free viewpoint information comprises at least one of video component information, audio component information, camera position information, microphone position information, zoom in/out information, and audio length information, corresponding to each of the plurality of viewpoints.

4. The user terminal of claim 1, wherein the MPD comprises at least one of a video adaptation set and an audio adaptation set corresponding to each of a plurality of viewpoints.

5. The user terminal of claim 4, wherein the video adaptation set comprises a plurality of representations that is encoded based on a plurality of resolutions, respectively.

6. The user terminal of claim 1, wherein the processor is configured to extract at least one of service identification (ID) information, video and audio segments of a service, and information about a channel through which the video and the audio segments are transmitted, corresponding to the request of the user using the USBD, and to set the payload.

7. A method of receiving a free viewpoint image, the method comprising:
receiving a signaling that comprises a plurality of pieces of metadata for receiving the free viewpoint image;
detecting a service layer associated with the free viewpoint image based on the signaling; and
setting a payload for receiving the free viewpoint image by referring to the plurality of pieces of metadata based on the detected service layer.

8. The method of claim 7, wherein the plurality of pieces of metadata represent data generated based on eXtensible Markup Language (XML).

9. The method of claim 7, wherein the receiving of the signaling comprises receiving the signaling that comprises first metadata comprising at least one of video component information, audio component information, camera position information, camera angle information, microphone position information, microphone angle information, rotation information of a camera, translation information of the camera, a mean reprojection error, feature point information of video frames, zoom in/out information, and audio length information, corresponding to the free viewpoint image.

10. The method of claim 7, wherein the receiving of the signaling comprises receiving the signaling that comprises user service bundle description (USBD), transmission information (service-based transport session instance description (S-TSID)), media information (media presentation description (MPD)), and free viewpoint information.

11. A base station comprising:
an encoder configured to encode a service layer signaling that comprises user service bundle description (USBD), transmission information (service-based transport session instance description (S-TSID)), media information (media presentation description (MPD)), and free viewpoint information, associated with a free viewpoint image; and
a communicator configured to transmit the service layer signaling corresponding to an Advanced Television System Committee (ATSC) 3.0 protocol to a user terminal.

12. The base station of claim 11, wherein the free viewpoint information comprises at least one of video component information, audio component information, camera position information, camera angle information, microphone position information, microphone angle information, rotation information of a camera, translation information of the camera, a mean reprojection error, feature point information of video frames, zoom in/out information, and audio length information, corresponding to the free viewpoint image.

13. The base station of claim 11, wherein the MPD comprises segment information corresponding to each of a plurality of viewpoints, and
the free viewpoint information comprises at least one of video component information, audio component information, camera position information, microphone position information, zoom in/out information, and audio length information, corresponding to each of the plurality of viewpoints.

14. The base station of claim 11, wherein the MPD comprises at least one of a video adaptation set and an audio adaptation set corresponding to each of the plurality of viewpoints.

15. The base station of claim 11, wherein the video adaptation set comprises a plurality of segments classified based on a preset time interval.
